# EUROPEAN PATENT APPLICATION

(11) **EP 4 160 767 A1**
(43) Date of publication of application: **05.04.2023**
(21) Application number: 21936240.7
(22) Date of filing: 12.08.2021
(51) Int. Cl.: H01M 10/0525, H01M 50/14, H01M 50/16

(54) **SEPARATOR, LITHIUM-ION BATTERY, BATTERY MODULE, BATTERY PACK, AND POWER CONSUMING DEVICE**

(71) Applicant: Contemporary Amperex Technology Co., Limited, Ningde, Fujian 352100 (CN)
(72) Inventor: XIE, Tingzhen, Ningde Fujian 352100 (CN); OUYANG, Shaocong, Ningde Fujian 352100 (CN); FU, Chenghua, Ningde Fujian 352100 (CN); WANG, Bo, Ningde Fujian 352100 (CN); YE, Yonghuang, Ningde Fujian 352100 (CN)
(74) Representative: Gong, Jinping
(86) International application number: PCT/CN2021/112255
(87) International publication number: WO 2023/015521

(57) **Abstract**

This application develops a separator with an organic-inorganic hybrid layer. By comprehensively adjusting an adaptive collocation relationship between the median diameter of the first inorganic particles and the median diameter of the second inorganic particles, and by controlling reasonable collocation between the micronscale particles and the nanoscale particles, this application develops a separator that is capable of significantly reducing transition metal ions in an electrolytic solution and that is highly ion-permeable, thereby significantly improving the cycle performance and storage performance of lithium-ion batteries.

## Description

### TECHNICAL FIELD

This application relates to the technical field of lithium batteries, and in particular, to a separator, a lithium-ion battery containing same, a battery module, a battery pack, and an electrical device.

### BACKGROUND

With the popularization of consumer electronic products and new energy vehicles, consumers have imposed higher requirements on durability and longevity of lithium-ion batteries. One of the main research and development directions for the lithium-ion batteries currently is to design a lithium-ion battery with excellent storage performance and superior power performance concurrently on the basis of ensuring a relatively low manufacturing cost.

Among positive active materials commonly used in the lithium-ion batteries, lithium manganese oxide is widely used by virtue of abundant raw materials, simple manufacture, low price, and high safety. However, in deep charge-and-discharge cycles, the storage performance and power performance of lithium-ion batteries prepared from lithium manganese oxide materials have not been improved effectively so far.

### SUMMARY

This application is put forward in view of the foregoing issues, and aims to provide a separator that is capable of effectively improving storage performance of a battery and that achieves superior power performance concurrently, and to provide a lithium-ion battery containing same, a battery module, a battery pack, and an electrical device.

In order to achieve the foregoing objective, a first aspect of this application provides a separator. The separator includes a base film and an organic-inorganic hybrid layer located on at least one surface of the base film. The organic-inorganic hybrid layer includes inorganic particles and an organic binder.

The inorganic particles are formed of first inorganic particles with a micronscale median diameter and second inorganic particles with a nanoscale median diameter. A ratio of a median diameter value D1 of the first inorganic particles in µm to a median diameter value D2 of the second inorganic particles in nm satisfies 2 ≤ D2/D1 ≤ 55. The first inorganic particles or the second inorganic particles are selected from (SiOₓ)(H₂O)_{y} or (M^{c+})_{b}(SiO_{z})^{a-}, where, 0 ≤ x ≤ 2, 0 ≤ y ≤ 2, y is an integer, z = 3 or 4, a = 2 or 4, b × c = a, and M is optionally one or more of lithium, sodium, potassium, magnesium, calcium, or aluminum.

In any embodiment, a part of the first inorganic particles and/or the second inorganic particles protrude from a surface of the organic-inorganic hybrid layer of the separator according to this application.

In any embodiment, in the organic-inorganic hybrid layer of the separator according to this application, the median diameter value D1 of the first inorganic particles in µm is 1 to 5, and the median diameter value D2 of the second inorganic particles in nm is 10 to 55.

In any embodiment, in the organic-inorganic hybrid layer of the separator according to this application, a number-average molecular weight of the organic binder is 1 million to 5 million, for example, 1 million to 3.6 million, or 1 million to 2 million; and a viscosity range of a 1% water solution at a normal temperature is 1000 to 5000 mPa·s.

In any embodiment, in the organic-inorganic hybrid layer of the separator according to this application, the organic binder is at least one of an alkali metal salt of carboxylic acid containing a hydroxyl and/or a carboxyl, or an alkali metal salt of sulfonic acid containing a hydroxyl and/or a carboxyl, and further optionally at least one of sodium carboxymethyl cellulose (CMC-Na), polyacrylic acid sodium (PAA-Na), sodium polystyrene sulfonate (PSS-Na), or sodium alginate (SA).

In any embodiment, in the organic-inorganic hybrid layer of the separator according to this application, the inorganic particles are one or more of Si, SiO₂, H₂SiO₃, H₄SiO₄, K₂SiO₃, K₄SiO₄, or Na₄SiO₄; and optionally, the first inorganic particles are optionally at least one of Si, SiO₂, H₂SiO₃, H₄SiO₄, K₂SiO₃, K₄SiO₄, or Na₄SiO₄, and the second inorganic particles are optionally SiO₂ and/or K₂SiO₃.

In any embodiment, in the organic-inorganic hybrid layer of the separator according to this application, a mass m1 of the first inorganic particles and a mass m2 of the second inorganic particles satisfy 0.5 ≤ m1/m2 ≤ 4.

In any embodiment, in the organic-inorganic hybrid layer of the separator according to this application, a ratio A1/A2 of a mass percent A1 of the organic binder to a mass percent A2 of the inorganic particles is (0.1 to 25): 100.

In any embodiment, in the organic-inorganic hybrid layer of the separator according to this application, a mass percent of the inorganic particles is 80% to 99.9%, a mass percent of the organic binder is 0.1% to 20%, based on a total mass of the organic-inorganic hybrid layer.

In any embodiment, a thickness d1 of the organic-inorganic hybrid layer of the separator according to this application is 20% to 50% of a total thickness d of the separator, and the total thickness d of the separator is 6 to 25 µm.

In any embodiment, the base film of the separator according to this application includes a front side and a reverse side. The front side includes a front coating region and a front blank region, and an areal ratio between the front coating region and the front blank region is (1 to 3): 1. The reverse side includes a reverse coating region and a reverse blank region. An areal ratio between the reverse coating region and the reverse blank region is (0.5 to 1): 1. The front coating region and the reverse coating region are surface-coated with the organic-inorganic hybrid layer.

In any embodiment, the front side and reverse side of the base film each are coated with the organic-inorganic hybrid layer, and a mass percent of inorganic particles in the organic-inorganic hybrid layer on the front side of the base film is not less than a mass percent of inorganic particles in the organic-inorganic hybrid layer on the reverse side of the base film. The organic-inorganic hybrid layer on the front side of the base film is in contact with a positive electrode, and the organic-inorganic hybrid layer on the reverse side of the base film is in contact with a negative electrode.

In any embodiment, further, the front blank region coincides with an orthographic projection of the reverse coating region, the reverse blank region coincides with an orthographic projection of the front coating region, and the front coating region and the reverse coating region are surface-coated with the organic-inorganic hybrid layer.

In any embodiment, a thermal shrinkage rate of the separator is 70% to 75% lower than a thermal shrinkage rate of the base film.

A second aspect of this application provides a lithium-ion battery, including the separator according to the first aspect of this application.

A third aspect of this application provides a battery module, including the lithium-ion battery according to the second aspect of this application.

A fourth aspect of this application provides a battery pack, including at least one of the lithium-ion battery according to the second aspect of this application or the battery module according to the third aspect of this application.

A fifth aspect of this application provides an electrical device, including at least one of the lithium-ion battery according to the second aspect of this application, the battery module according to the third aspect of this application, or the battery pack according to the fourth aspect of this application. The lithium-ion battery or the battery module or the battery pack may be used as a power supply of the electrical device or an energy storage unit of the electrical device.

The battery module, the battery pack, and the electrical device according to this application each contain the lithium-ion battery according to this application, and therefore, have at least the same advantages as the lithium-ion battery.

This application achieves at least the following beneficial effects:

This application develops a separator with an organic-inorganic hybrid layer. By comprehensively adjusting an adaptive collocation relationship between the median diameter of the first inorganic particles and the median diameter of the second inorganic particles, and by controlling reasonable collocation between the micronscale particles and the nanoscale particles, this application develops a separator that is capable of significantly reducing the number of transition metal ions in an electrolytic solution and that is highly ion-permeable, thereby significantly improving the storage performance and power performance of lithium-ion batteries.

### BRIEF DESCRIPTION OF DRAWINGS

FIG. 1 is a schematic structural diagram of a separator according to an embodiment of this application;
FIG. 2 is a schematic structural diagram of a separator according to an embodiment of this application;
FIG. 3 is a schematic diagram of front and reverse coating regions of a base film according to an embodiment of this application;
FIG. 4 is a schematic diagram of a lithium-ion battery according to an embodiment of this application;
FIG. 5 is an exploded view of the lithium-ion battery shown in FIG. 4 according to an embodiment of this application;
FIG. 6 is a schematic diagram of a battery module according to an embodiment of this application;
FIG. 7 is a schematic diagram of a battery pack according to an embodiment of this application;
FIG. 8 is an exploded view of the battery pack shown in FIG. 7 according to an embodiment of this application; and
FIG. 9 is a schematic diagram of an electrical device according to an embodiment of this application.

### Reference numerals:

1. Battery pack;
2. Upper box;
3. Lower box;
4. Battery module;
5. Secondary battery;
51. Housing;
52. Electrode assembly;
53. Cap assembly.

### DETAILED DESCRIPTION OF EMBODIMENTS

The following describes in detail a separator, a lithium-ion battery containing same, a battery module, a battery pack, and an electrical device according to this application with due reference to drawings. However, unnecessary details may be omitted in some cases. For example, a detailed description of a well-known matter or repeated description of a substantially identical structure may be omitted. That is intended to prevent the following descriptions from becoming unnecessarily long, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by selecting a lower limit and an upper limit. The selected lower and upper limits define the boundaries of the given range. A range so defined may be inclusive or exclusive of the end values, and may be arbitrarily combined. That is, any lower limit may be combined with any upper limit to form a range. For example, if a range of 60 to 120 and a range of 80 to 110 are listed for a given parameter, it is expectable that such ranges may be understood as 60 to 110 and 80 to 120. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, the numerical range "0 to 5" means that all real numbers between 0 and 5 inclusive are listed herein, and the range "0 to 5" is just a brief representation of combinations of such numbers. In addition, when a parameter is expressed as an integer greater than or equal to 2, the expression is equivalent to that the parameter is an integer such as 2, 3, 4, 5, 6, 7, 8, 9, 10, 11, 12, and the like.

In this application, a number modified by "at least" or "less than or equal to" represents a range inclusive of this number. For example, "at least one" means one or more, "at least one of A or B" means A alone, B alone, or both A and B.

Unless otherwise expressly specified herein, all embodiments and optional embodiments hereof may be combined with each other to form a new technical solution.

Unless otherwise expressly specified herein, all technical features and optional technical features hereof may be combined with each other to form a new technical solution.

Unless otherwise expressly specified herein, all the steps described herein may be performed sequentially or randomly, and preferably, performed sequentially. For example, that the method includes steps (a) and (b) indicates that the method may include steps (a) and (b) performed sequentially, or steps (b) and (a) performed sequentially. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, and may also mean closed-ended inclusion. For example, the terms "include" and "comprise" may mean inclusion of other items not listed, or inclusion of only the listed items.

Unless otherwise expressly specified herein, the term "or" is inclusive. For example, the phrase "A or B" means "A alone, B alone, or both A and B." More specifically, the condition "A or B" is satisfied by any of the following: A is true (or existent) and B is false (or absent); A is false (or absent) and B is true (or existent); or, both A and B are true (or existent).

Based on long-term experience in preparing lithium ion batteries, the inventor hereof finds that, in a deep charge-and-discharge process, the structure of a lithium manganese oxide material containing transition metals is prone to lattice distortion, and is prone to corrosion by an electrolytic solution infiltrating the structure (especially the corrosion by hydrofluoric acid generated during decomposition of the electrolytic solution), thereby dissolving out Mn³⁺ and/or Mn⁴⁺ in the structure from the lithium manganese oxide lattice structure, and further disproportionating into Mn²⁺ in an electrochemical redox reaction. The generated Mn²⁺ migrates to the surface of the negative electrode gradually under the action of a potential difference, and is further reduced to metal manganese. The generated metal manganese is equivalent to a "catalyst", and can catalyze a solid electrolyte interphase (SEI) film on the surface of the negative electrode, and rapidly decomposes an organic lithium component and an inorganic lithium component in the SEI film, thereby leading to failure of the SEI film, and eventually, deteriorating electrical performance of the battery.

After the SEI film is decomposed under "catalysis", the lost SEI film is made up for during the charge-and-discharge cycle of the battery. Therefore, the electrolytic solution and the active lithium inside the battery are continuously consumed and converted into organic lithium/inorganic lithium components in a new SEI film. Consequently, the content of the active lithium that really contributes to the charge and discharge declines, thereby bringing an irreversible impact on the cycle performance and storage performance of the battery. Furthermore, the process of the metal manganese catalyzing and decomposing the SEI film gives rise to a series of by-products. The by-products are deposited on the surface of the negative electrode, and obstruct the channels of lithium ions into and out of the negative electrode, thereby increasing the impedance of the battery. In addition, the continuous consumption of the electrolyte in the electrolytic solution deteriorates electronic conductivity of the electrolytic solution, and increases a migration resistance of lithium ions between the positive electrode and the negative electrode, thereby aggravating the impedance of the battery.

Based on a lot of experiments and research, the inventor finds that the following approaches may be taken to reduce side effects of the transition metal manganese on the battery: first, physically obstructing the Mn²⁺ generated by the lithium manganese oxide from migrating to the surface of the negative electrode; and second, chemically eliminating the Mn²⁺ generated by the lithium manganese oxide, thereby reducing or even eliminating the amount migrated to the negative electrode. The two approaches and a synergistic effect of the two approaches can significantly reduce the metal manganese that decomposes the SEI film. Therefore, by combining effects of the two approaches, comprehensively modifying the structural characteristics and chemical composition of the separator, and fully leveraging the two approaches synergistically, the inventor has designed a separator capable of significantly reducing the transition metal on the surface of the negative electrode to improve the cycle performance and storage performance of lithium-ion batteries greatly.

It is hereby noted that the separator according to this application is highly air permeable at the same time, and neither affects free transport of lithium ions inside the separator nor reduces the transport rate of lithium ions inside the separator.

### [Separator]

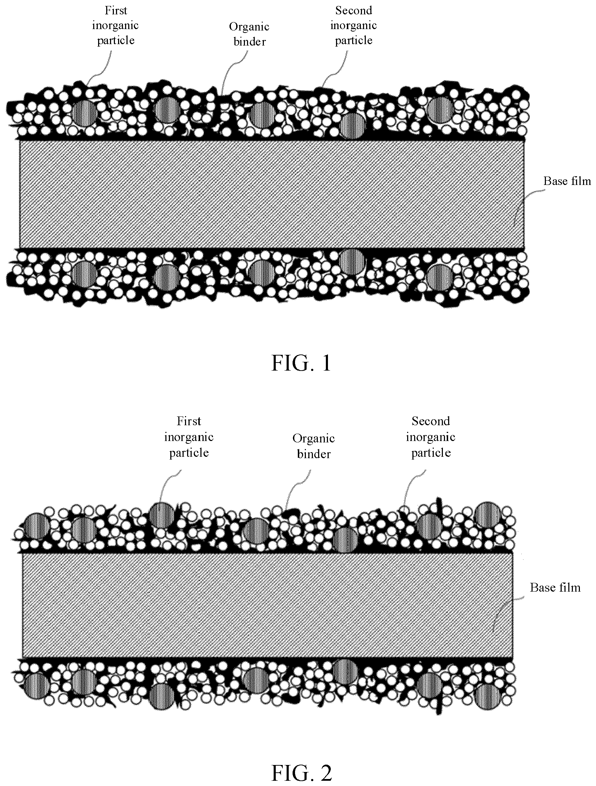

Referring to FIG. 1, this application provides a separator. The separator includes a base film and an organic-inorganic hybrid layer located on at least one surface of the base film. The organic-inorganic hybrid layer includes inorganic particles and an organic binder.

The inorganic particles are formed of first inorganic particles with a micronscale median diameter and second inorganic particles with a nanoscale median diameter. A ratio of a median diameter value D 1 of the first inorganic particles in µm to a median diameter value D2 of the second inorganic particles in nm satisfies 2 ≤ D2/D1 ≤ 55. The first inorganic particles or the second inorganic particles are selected from (SiOₓ)(H₂O)_{y} or (M^{c+})_{b}(SiO_{z})^{a-}, where, 0 ≤ x ≤ 2, 0 ≤ y ≤ 2, y is an integer, z = 3 or 4, a = 2 or 4, b × c = a, and M is optionally one or more of lithium, sodium, potassium, magnesium, calcium, or aluminum.

The organic-inorganic hybrid coating layer on the separator according to this application serves a function of physically obstructing transition metal ions, and therefore, to some extent, brings an effect of delaying or hindering the migration of transition metal ions from the positive electrode to the negative electrode.

The organic-inorganic hybrid layer according to this application is a structure of a predetermined thickness compounded of an organic binder and inorganic particles. The organic binder can bond non-adhesive inorganic particles onto the base film firmly, thereby preventing the inorganic particles from falling off during storage or cycling of the battery.

Further, the (SiOₓ)(H₂O)_{y} and (M^{c+})_{b}(SiO_{z})^{a-} particles according to this application contain Si-OH groups inherently. In addition, the hydrofluoric acid generated during the battery cycles just make the electrolytic solution exhibit an acidic environment on the whole, thereby adding Si-OH groups to the surface of the (SiOₓ)(H₂O)_{y} and (M^{c+})_{b}(SiO_{z})^{a-} particles. The inorganic particles with Si-OH groups on the surface can combine with some inherent groups of the organic binder according to this application to form a hydrogen bond, thereby achieving firmer bonding between the inorganic particles according to this application and the organic binder according to this application.

As verified in a large number of experiments, a specified electrolytic solution environment of the lithium-ion battery in addition to the complex environment formed inside the battery by chemical reactions imparts special activity to the inorganic (SiOₓ)(H₂O)_{y} and (M^{c+})_{b}(SiO_{z})^{a-} particles according to this application. Therefore, the separator according to this application can effectively capture the hydrofluoric acid in the electrolytic solution while implementing the basic function of isolation between the positive electrode and the negative electrode. This reduces or avoids transition metal ions derived from the hydrofluoric acid corroding the positive electrode material, reduces the number of transition metal ions in the electrolytic solution, significantly reduces the number of transition metal ions migrated to the surface of the negative electrode, and in turn, improves the storage performance and cycle performance of the lithium-ion battery greatly.

In this application, the inorganic particles are formed of first inorganic particles with a micronscale median diameter and second inorganic particles with a nanoscale median diameter. The terms "median diameter" and "median diameter (D50)" herein have the same meaning, that is, a particle size measured when a cumulative particle size distribution percentage of tested particles reaches 50% of the total size of aggregate particles, and physically represent a particle size than which 50% of aggregate particles are larger and 50% of aggregate particles are smaller, which is generally used to represent the average particle size. It is hereby noted that "D1" and "D2" herein represent the median diameter value of the first inorganic particles in µm, and the median diameter value of the second inorganic particles in nm, respectively, and have different meanings than the median diameter D50. For example, "median diameter D1" is a value of the median diameter D50 of the first inorganic particles in µm, and means that the particle size measured when a cumulative particle size distribution percentage of tested particles reaches 50% of the total size of aggregate particles is D1 µm. D50 is generally used to represent the average particle size of particles; "micronscale" means a range of median diameters greater than 0 and less than 1 mm, and "nanoscale" means a range of median diameters greater than 0 and less than 1 micron.

In this application, in the organic-inorganic hybrid layer, the micronscale first inorganic particles are combined with nanoscale second inorganic particles. When the ratio of the median diameter value D1 of the first inorganic particles in µm to the median diameter value D2 of the second inorganic particles in nm satisfies 2 ≤ D2/D1 ≤ 55, two effects are achieved: on the one hand, the surface area used for capturing hydrofluoric acid is maximally increased through reasonable stacking of large and small particles; on the other hand, the organic-inorganic hybrid layer achieves an appropriate pore structure to avoid hindering the transport of lithium ions, thereby ultimately improving the storage performance and power performance of the lithium-ion battery significantly. For details, refer to Table 1.

It is hereby noted that D2/D1 merely represents a ratio between two values regardless of units. For example, D2 = 10 nm, D1 = 1 µm, and therefore, D2/D1 = 10/1 = 10.

Optionally, the value of D2/D1 may be 10, 25, 33.3, 55, or fall within a range formed by any two thereof.

This application develops a separator with an organic-inorganic hybrid layer. By comprehensively adjusting an adaptive collocation relationship between the median diameter of the first inorganic particles and the median diameter of the second inorganic particles, and by controlling reasonable collocation between the micronscale particles and the nanoscale particles, this application develops a separator that is capable of significantly reducing the number of transition metal ions in an electrolytic solution and that is highly ion-permeable, thereby significantly improving the storage performance and power performance of lithium-ion batteries.

In some embodiments, referring to FIG. 2, a part of the first inorganic particles and/or second inorganic particles may protrude from the surface of the organic-inorganic hybrid layer. It is hereby noted that the term "part" herein is merely for ease of description, and is intended to indicate existence of the first inorganic particles and/or second inorganic particles protruding from the surface of the organic-inorganic hybrid layer, but not to indicate a specific quantity. Nevertheless, the weight percent of the first inorganic particles and/or second inorganic particles protruding from the surface of the organic-inorganic hybrid layer may be 2 wt% to 85 wt%, such as 5 wt%, 20 wt%, 50 wt %, or 80 wt %, of the total weight of all inorganic particles, or fall within a range formed by any two thereof.

That the inorganic particles protrude from the surface of the organic-inorganic hybrid layer can implement direct contact between the electrolytic solution and the inorganic particles. In this way, the inorganic particles on the separator can capture the hydrofluoric acid in the electrolytic solution quickly in time, thereby alleviating the corrosion caused by the electrolytic solution to the lithium manganese oxide, reducing the transition metals dissolved out, and in turn, improving the storage performance and power performance of the battery.

In some embodiments, optionally, the median diameter value D1 of the first inorganic particles in µm is 1 to 5, and the median diameter value D2 of the second inorganic particles in nm is 10 to 55.

For example, the median diameter of the first inorganic particles may be 1 µm, 1.2 µm, 1.5 µm, 2 µm, 3 µm, 5 µm, or 6 µm, and the median diameter of the second particles may be 10 nm, 30 nm, 50 nm, 55 nm, or 500nm, or fall within a range formed by any two thereof.

In this application, an appropriate median diameter of the first inorganic particles and second inorganic particles can broaden a contact area between inorganic particles and the electrolytic solution, where the inorganic particles are a combination of the first inorganic particles and the second inorganic particles in the organic-inorganic hybrid layer. In this way, the inorganic particles can capture the hydrofluoric acid in the electrolytic solution more effectively.

It is hereby noted that the inorganic particles with different median diameters in this application are commercially available or synthesized by a method known in the prior art. Sources of specific materials involved in the embodiments of this application are shown in Table A.

In some embodiments, optionally, the average molecular weight of the organic binder configured to prepare the separator according to this application is 1 million to 5 million, for example, 1 million to 3.6 million, or 1 million to 2 million; and the viscosity range of a 1% water solution at a normal temperature is 1000 to 5000 mPa·s. The molecular weight may be determined by a method commonly used by a person skilled in the art, for example, determined with reference to GB/T 21864-2008. The viscosity may be determined by a method commonly used by a person skilled in the art, for example, determined with reference to GB/T 10247-2008.

In some embodiments, optionally, the organic binder is at least one of an alkali metal salt of carboxylic acid containing a hydroxyl and/or a carboxyl, or an alkali metal salt of sulfonic acid containing a hydroxyl and/or a carboxyl, and further optionally at least one of sodium carboxymethyl cellulose (CMC-Na), polyacrylic acid sodium (PAA-Na), sodium polystyrene sulfonate (PSS-Na), or sodium alginate (SA).

It is hereby noted that the surface of the organic binder according to this application is rich in carboxyl groups and/or hydroxyl groups, which can react with manganese ions by means of chelating reactions, thereby achieving an effect of capturing and immobilizing manganese ions, alleviating or avoiding migration of the manganese ions to the negative electrode in which the manganese ions catalyzes the SEI film to decompose, and further improving the storage performance and power performance of the battery.

In some embodiments, optionally, the inorganic particles are one or more of Si, SiO₂, H₂SiO₃, H₄SiO₄, K₂SiO₃, K₄SiO₄, or Na₄SiO₄. Optionally, the first inorganic particles are at least one of Si, SiO₂, H₂SiO₃, H₄SiO₄, K₂SiO₃, K₄SiO₄, or Na₄SiO₄, and the second inorganic particles are optionally SiO₂ and/or K₂SiO₃.

In this application, a Si-O-CO-R covalent bond can be formed between the alkali metal salt of the carboxylic acid containing a hydroxyl and/or a carboxyl, the alkali metal salt of sulfonic acid containing a hydroxyl and/or a carboxyl, and the siliceous inorganic particles according to this application, thereby forming a porous organic-inorganic hybrid network in the organic-inorganic hybrid layer, and achieving firmer bonding between the organic binder and the inorganic particles. In addition, the formation of the porous organic-inorganic hybrid network facilitates free shuttling of lithium ions.

It is hereby noted that the inorganic particles Si, SiO₂, H₂SiO₃, H₄SiO₄, K₂SiO₃, K₄SiO₄, or Na₄SiO₄ in the separator according to this application can not only effectively capture the hydrofluoric acid in the electrolytic solution to alleviate the dissolution of transition metal in the positive electrode material, but also form a covalent bond with the organic binder to generate an organic-inorganic hybrid network, thereby providing a channel for the transport of lithium ions.

In some embodiments, optionally, in the organic-inorganic hybrid layer, a mass m1 of the first inorganic particles and a mass m2 of the second inorganic particles satisfy 0.5 ≤ m1/m2 ≤ 4.

In the organic-inorganic hybrid layer according to this application, a reasonable mass ratio between the first inorganic particles and the second inorganic particles helps to increase the specific surface area of the hydrofluoric acid captured in the electrolytic solution in the organic-inorganic hybrid layer, and increases the amount of hydrofluoric acid captured. For details, refer to Table 2.

Optionally, the value of m1/m2 may be 0.5, 0.67, 1.2, 2.5, 4.0, or fall within a range formed by any two thereof.

In some embodiments, optionally, in the organic-inorganic hybrid layer, the ratio A1/A2 of a mass percent A1 of the organic binder to a mass percent A2 of the inorganic particles is (0.1 to 25): 100. Optionally, the value of A1/A2 may be 0.1, 2.5, 5.3, 11.9, 25, or fall within a range formed by any two thereof.

In some embodiments, optionally, in the organic-inorganic hybrid layer, a mass percent of the inorganic particles is 80% to 99.9%, a mass percent of the organic binder is 0.1% to 20%, based on a total mass of the organic-inorganic hybrid layer.

In the organic-inorganic hybrid layer, when the content of the organic binder is less than 0.1%, the bonding strength between the organic-inorganic hybrid layer and the base film is low, the coating layer is prone to fall off, and the bonding effect is poor. In addition, the organic binder is not strong enough to form a chemical bond with inorganic particles. Consequently, the inorganic particles are prone to fall off, and the rate of capturing the hydrofluoric acid in the electrolytic solution decreases, thereby being adverse to improving the storage performance and cycle performance of the battery. When the content of the organic binder is higher than 20%, the viscosity of the coating slurry is excessive, and the fluidity of the slurry is poor, making it difficult to prepare the slurry. In addition, the organic binder does not contribute to the battery capacity, and an excessive dosage thereof reduces the energy density of the battery. Therefore, an appropriate weight percent of the organic component and the inorganic component in the organic-inorganic hybrid layer can not only ensure the bonding strength between the separator and the coating layer, but also prevent the inorganic particles from falling off. In addition, the toughness of the separator is caused to fall within a reasonable range without reducing the energy density of the battery, thereby improving the storage performance and power performance of the battery significantly. For details, refer to Table 3.

In some embodiments, optionally, the ratio A1/m1 of the mass A1 of the organic binder to the mass m1 of the first inorganic particles may be (0.125 to 75): 100.

Optionally, A1/m1 may be 0.25: 100, 6.23: 100, 13.21: 100, 28.41: 100, or 62.31: 100, or fall within a range formed by any two thereof.

In some embodiments, optionally, the ratio A1/m2 of the mass A1 of the organic binder to the mass m2 of the second inorganic particles may be (0.15 to 125): 100.

Optionally, A1/m2 may be 0.17: 100, 4.18: 100, 8.85: 100, 19: 100, or 41.75: 100, or fall within a range formed by any two thereof.

In some embodiments, optionally, the thickness d1 of the organic-inorganic hybrid layer is 20% to 50% of the total thickness d of the separator, and the total thickness d of the separator is 6 to 25 µm, for example, 10 µm, 11 µm, 12 µm, 13 µm, 16 µm, 20 µm, 24 µm, or falls within a range formed by any two thereof. It is hereby noted that the total thickness d of the separator described herein is a sum of the thickness d1 of the organic-inorganic hybrid layer and the thickness of the base film. When the base film is coated on both the front side and the reverse side, d1 is a sum of the thicknesses of the organic-inorganic hybrid layers on the front side and the reverse side of the base film.

Optionally, the thickness d1 of the organic-inorganic hybrid layer is 20%, 27%, 36%, 42%, or 46% of the total thickness d of the separator, or falls within a range formed by any two thereof.

The thickness of the separator of the lithium-ion battery separator needs to be less than 25 µm (specified by the United States Advanced Battery Consortium (USABC)). If the thickness percent of the separator coating layer is less than 20%, and the base film itself is thin, for example, as thin as 5 µm, the thickness of coating layer on a single side is less than 0.5 µm, making it difficult to process the material commercially. If the thickness percent of the organic-inorganic hybrid layer is higher than 50%, the air permeability does not meet practical requirements, the ionic conductivity is low, the rate performance of the battery decreases significantly, and the storage performance and power performance of the battery are adversely affected.

Based on the total thickness of the separator, the thickness d1 of the organic-inorganic hybrid layer is 20% to 50% of the total thickness d of the separator. When the thickness falls within this range, the percentage of the thickness of the organic-inorganic hybrid layer in the thickness of the separator falls within a reasonable range, thereby not only ensuring efficient capture of the hydrofluoric acid in the electrolytic solution, but also ensuring that the air permeability of the separator falls within a reasonable range, and in turn, helping to improve the storage performance of the battery. For details, refer to Table 4.

In some embodiments, optionally, the mass percent of inorganic particles in the organic-inorganic hybrid layer on the front side of the base film is not less than the mass percent of inorganic particles in the organic-inorganic hybrid layer on the reverse side of the base film. The organic-inorganic hybrid layer on the front side of the base film is in contact with a positive electrode, and the organic-inorganic hybrid layer on the reverse side of the base film is in contact with a negative electrode. It is hereby noted that the side of the base film, oriented toward the positive electrode, is herein referred to as the "front side of the base film", and the side of the base film, oriented toward the negative electrode, is herein referred to as the "reverse side of the base film".

The coating layer on the front side that is of the separator and that contacts the positive electrode is in direct contact with the positive active material, and therefore, preferentially captures the hydrofluoric acid and some transition metal ions dissolved out. Therefore, in an optional embodiment, the mass percent of inorganic particles in the hybrid layer on the front side of the separator may be greater than the mass percent of inorganic particles on the reverse side, both being preferably not less than 95%, with a view to capturing the hydrofluoric acid more quickly in larger amounts.

In some embodiments, optionally, the front side of the base film includes a front coating region and a front blank region, and an areal ratio between the front coating region and the front blank region is (1 to 3): 1. The reverse side of the base film includes a reverse coating region and a reverse blank region. An areal ratio between the reverse coating region and the reverse blank region is (0.5 to 1): 1. The front coating region and the reverse coating region are surface-coated with the organic-inorganic hybrid layer.

The coating layer on the front side that is of the separator and that contacts the positive electrode is in direct contact with the active material, and therefore, preferentially captures the hydrofluoric acid and the transition metal ions dissolved out. Therefore, the coating area on the front side of the separator needs to be larger than that on the reverse side, with a view to capturing more quickly in larger amounts. In addition, the front side and the reverse side are coated at intervals, so as to alleviate the impairment of the air permeability caused by the coating layer and alleviate the obstruction of ion transmission. Therefore, the overlap coating region between the front side and the reverse side needs to avoid being excessive. When the areal ratio between the front coating region and the front blank region is less than 1: 1, or the areal ratio between the reverse coating region and the reverse blank region is less than 0.5: 1, it indicates that the coating amount is not enough to achieve a good capture effect. When the areal ratio between the front coating region and the front blank region is greater than 3: 1, or the areal ratio between the reverse coating region and the reverse blank region is greater than 1: 1, it indicates that the coating amount is excessive and much adverse to air permeability. When the areal ratio between the front coating region and the front blank region falls within (1 to 3): 1, and the areal ratio between the reverse coating region and the reverse blank region falls within (0.5 to 1): 1, both the hydrofluoric acid capturing amount and the air permeability are appropriate. For details, refer to Table 5.

Optionally, the front side of the base film includes a front coating region and a front blank region. The areal ratio between the front coating region and the front blank region may be 1: 1, 1.5: 1, or 3: 1, or fall within a range formed by any two thereof. The reverse side of the base film includes a reverse coating region and a reverse blank region. The areal ratio between the reverse coating region and the reverse blank region may be 0.5: 1, 0.67: 1, or 1: 1, or fall within a range formed by any two thereof.

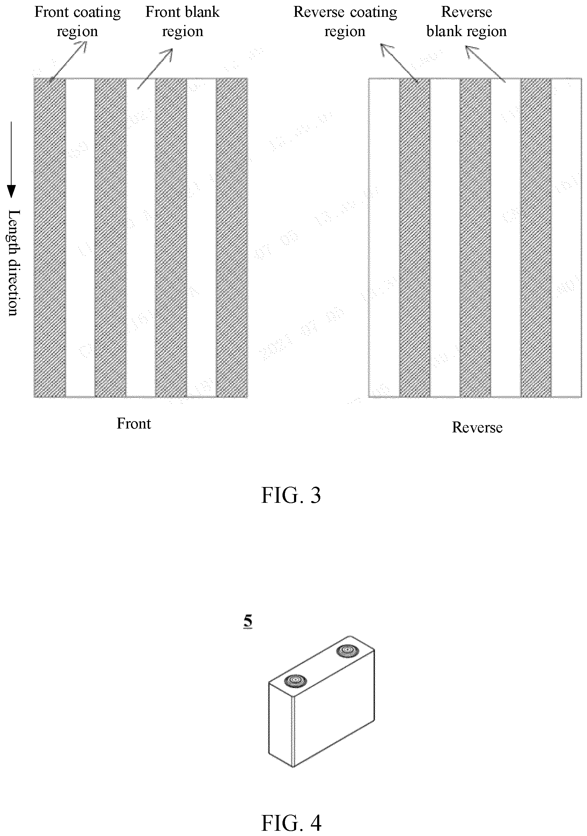

In some embodiments, optionally, the front blank region coincides with an orthographic projection of the reverse coating region, the reverse blank region coincides with an orthographic projection of the front coating region, and the front coating region and the reverse coating region are surface-coated with the organic-inorganic hybrid layer. For details, refer to FIG. 3.

The coating manner by which the front blank region coincides with the orthographic projection of the reverse coating region, and by which the reverse blank region coincides with the orthographic projection of the front coating region, can achieve the advantages of cost-efficiency of preparation, air permeability of the separator, and efficient capture of hydrofluoric acid concurrently.

In some embodiments, the mass percent of inorganic particles in the organic-inorganic hybrid layer on the front side of the base film is not less than the mass percent of inorganic particles in the organic-inorganic hybrid layer on the reverse side of the base film. The organic-inorganic hybrid layer on the front side of the base film is in contact with a positive electrode, and the organic-inorganic hybrid layer on the reverse side of the base film is in contact with a negative electrode.

The organic-inorganic hybrid layer on the front side is in direct contact with the positive film layer containing lithium manganese oxide. Therefore, when "the mass percent of inorganic particles in the organic-inorganic hybrid layer on the front side is not less than the mass percent of inorganic particles in the organic-inorganic hybrid layer on the reverse side of the base film", the effect in reducing the content of transition metal ions is more evident, a relatively high overall air permeability of the separator is achieved concurrently, and both the storage performance and power performance of the battery are improved. For details, refer to Table 6.

In some embodiments, optionally, a thermal shrinkage rate of the separator is 70% to 75% lower than a thermal shrinkage rate of the base film. As verified by experiments, the thermal shrinkage rate of the modified separator according to this application is improved significantly. For example, assuming that the thermal shrinkage rate of the separator made of an unmodified conventional polypropylene (PP) material is 100%, the thermal shrinkage rate of the modified separator according to this application is as low as 20% to 25%. The thermal shrinkage rate according to this application may be determined by a method commonly used in the art, for example, determined with reference to GB/T 13519-2016.

The type of the base film of the separator is not particularly limited in this application, and may be any well-known porous base film that is highly stable both chemically and mechanically.

In some embodiments, the material of the base film may be at least one selected from glass fiber, non-woven fabric, polyethylene, polypropylene, or polyvinylidene difluoride. The base film may be a single-layer film or a multilayer composite film, without being particularly limited. When the base film is a multilayer composite film, materials of different layers may be identical or different, without being particularly limited. The organic-inorganic hybrid layer according to this application is located on at least one surface of the single-layer base film or the composite base film.

### [Positive electrode plate]

The positive electrode plate includes a positive current collector and a positive film layer that overlays at least one surface of the positive current collector. The positive film layer includes a positive active material.

As an example, the positive current collector includes two surfaces opposite to each other in a thickness direction thereof. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material base layer and a metal layer formed on at least one surface of the polymer material base layer. The composite current collector may be formed by overlaying a polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known in the art for use in a battery. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. One of the positive active materials may be used alone, or at least two thereof may be combined and used together. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂, and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but are not limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, and the binder and any other ingredients in a solvent (such as N-methyl-pyrrolidone) to form a positive slurry, coating a positive current collector with the positive slurry, and performing steps such as drying and cold pressing to obtain the positive electrode plate.

### [Negative electrode plate]

The negative electrode plate includes a negative current collector and a negative film layer disposed on at least one surface of the negative current collector. The negative film layer includes a negative active material.

As an example, the negative current collector includes two surfaces opposite to each other in a thickness direction thereof. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material base layer and a metal layer formed on at least one surface of the polymer material base layer. The composite current collector may be formed by overlaying a polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material that is well known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, silicon-oxygen compound, silicon-carbon composite, silicon-nitrogen composite, or silicon alloy. The tin-based material may be at least one selected from simple-substance tin, tin-oxygen compound, or tin alloy. However, this application is not limited to such materials, and other conventional materials usable as a negative active material of a battery may be used instead. One of the negative active materials may be used alone, or at least two thereof may be combined and used together.

In some embodiments, the negative film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold pressing to obtain the negative electrode plate.

### [Electrolytic solution]

The electrolytic solution serves to conduct ions between the positive electrode plate and the negative electrode plate. The electrolytic solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolytic solution further optionally includes an additive. For example, the additive may include a negative film-forming additive or a positive film-forming additive. The additive may further include additives capable of improving specified performance of the battery, for example, an additive for improving the overcharge performance of the battery, an additive for suppressing electrolyte gassing, an additive for improving stability of the SEI film, an additive for improving high- or low-temperature performance of the battery, and the like.

### [Lithium-ion battery]

This application further provides a lithium-ion battery, including the separator according to the first aspect of this application. The positive electrode plate, the separator, and the negative electrode plate are wound to form an electrode assembly.

In some embodiments, the lithium-ion battery may further include an outer package. The outer package may be configured to package the electrode assembly and the electrolyte.

In some embodiments, the outer package of the lithium-ion battery may be a hard shell such as a hard plastic shell, an aluminum shell, a steel shell, or the like. Alternatively, the outer package of the lithium-ion battery may be a soft package such as a pouch-type soft package. The material of the soft package may be plastic such as polypropylene, polybutylene terephthalate, or polybutylene succinate.

The shape of the lithium-ion battery is not specifically limited in this application, and may be cylindrical, prismatic or any other shape. FIG. 4 shows a prismatic lithium-ion battery 5 as an example.

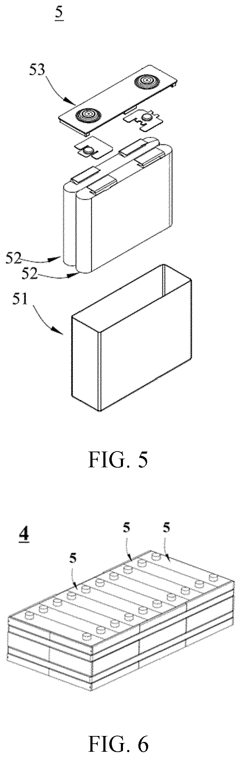

In some embodiments, referring to FIG. 5, the outer package may include a housing 51 and a cover plate 53. The housing 51 may include a bottom plate and a side plate connected to the bottom plate. The bottom plate and the side plate close in to form an accommodation cavity. The housing 51 is provided with an opening that communicates with the accommodation cavity. The cover plate 53 can cover the opening to close the accommodation cavity. The positive electrode plate, the negative electrode plate, and the separator may be wound or stacked to form the electrode assembly 52. The electrode assembly 52 is packaged in the accommodation cavity. The electrolytic solution serves a function of infiltration in the electrode assembly 52. The number of electrode assemblies 52 in a lithium-ion battery 5 may be one or more, and may be selected by a person skilled in the art as actually required.

In some embodiments, the lithium-ion battery may be assembled into a battery module. The battery module may include one or more lithium-ion batteries, and the specific number of lithium-ion batteries in a battery module may be selected by a person skilled in the art depending on practical applications and capacity of the battery module.

FIG. 6 shows a battery module 4 as an example. Referring to FIG. 6, in the battery module 4, a plurality of lithium-ion batteries 5 may be arranged sequentially along a length direction of the battery module 4. Alternatively, the secondary batteries may be arranged in any other manner. Further, the plurality of lithium-ion batteries 5 may be fixed by a fastener.

Optionally, the battery module 4 may further include a shell that provides an accommodation space. The plurality of lithium-ion batteries 5 are accommodated in the accommodation space.

In some embodiments, the battery modules may be assembled into a battery pack. The battery pack may include one or more battery modules, and the specific number of battery modules in a battery pack may be selected by a person skilled in the art depending on practical applications and capacity of the battery pack.

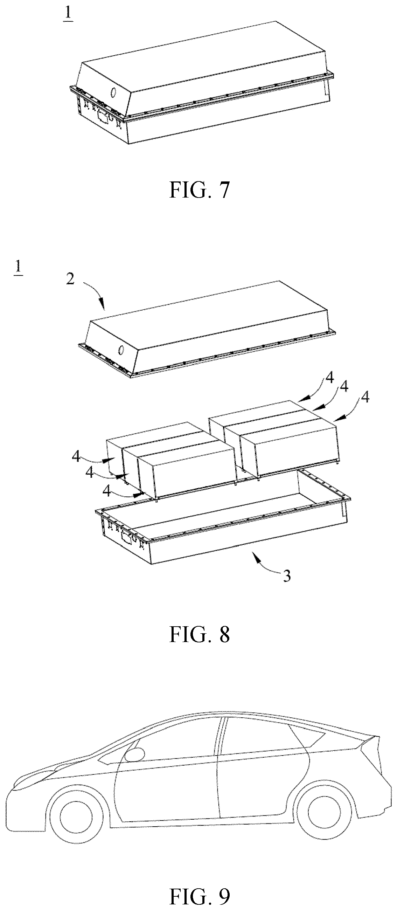

FIG. 7 and FIG. 8 show a battery pack 1 as an example. Referring to FIG. 7 and FIG. 8, the battery pack 1 may contain a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the lithium-ion battery, the battery module, or the battery pack according to this application. The lithium-ion battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The lithium-ion battery, the battery module, or the battery pack may be selected for the electrical device according to practical requirements.

FIG. 9 shows an electrical device as an example. The electrical device may be a battery electric vehicle, a hybrid electric vehicle, a plug-in hybrid electric vehicle, or the like. To meet the requirements of the electrical device for a high power and a high energy density of the lithium-ion battery, a battery pack or a battery module may be used for the device.

In another example, the device may be a mobile phone, a tablet computer, a notebook computer, or the like. The device is generally required to be thin and light, and may use a lithium-ion battery as a power supply.

### Embodiments

The following describes embodiments of this application. The embodiments described below are exemplary, and are merely intended to construe this application but not to limit this application. In a case that no specific technique or condition is specified in an embodiment, the techniques or conditions described in the literature in this field or described in the instruction manual of the product may apply. A reagent or instrument used herein without specifying the manufacturer is a conventional product that is generally used in this field or commercially available in the market. Unless otherwise specified herein, the content of each ingredient or component in the embodiments of this application is a fraction by mass containing no crystal water.

The terms are defined below: "separator in Embodiment 1-1" means the separator used in preparing the lithium-ion battery in Embodiment 1-1; "positive electrode plate in Embodiment 1-1" means the positive electrode plate used in preparing the lithium-ion battery in Embodiment 1-1; "negative electrode plate in Embodiment 1-1" means the negative electrode plate used in preparing the lithium-ion battery in Embodiment 1-1; "electrolytic solution in Embodiment 1-1" means the electrolytic solution used in preparing the lithium-ion battery in Embodiment 1-1; and "lithium-ion battery in Embodiment 1-1" means the lithium-ion battery prepared from the positive electrode plate, the separator, the negative electrode plate, and the electrolytic solution in Embodiment 1-1.

Sources of raw materials involved in the embodiments of this application are listed in the following table.

**Table A. 1**

| First inorganic particles | Particle diameter involved in embodiment (µm) | Direct source of purchase (CAS number, lot number, median diameter) | Planetary ball milling | Direct use |
|---|---|---|---|---|
| SiO₂ | 6 | www.macklin.cn | √ | |
| | | CAS: 60676-86-0, S817560, 10 µm | | |
| | 5 | www.macklin.cn | -- | √ |
| | | CAS: 60676-86-0, S817558, 5 µm | | |
| | 3 | www.macklin.cn | √ | -- |
| | | CAS: 60676-86-0, M814157, 3 µm | | |
| | 1, 1.2, 1.5 | www.macklin.cn | | |
| | | CAS: 60676-86-0, M814157, 3 µm | | √ |
| Si | 1 | www.aladdin-e.com | √ | -- |
| | | CAS: 7440-21-3, S108981, 40 to 200 mesh | | |
| K₂SiO₃ | 6 | www.macklin.cn | √ | -- |
| | 5 | | | |
| | 3 | | | |
| | 2 | CAS: 1312-76-1, P850160, 30 to 40 µm | | |
| | 1.5 | | | |
| | 1.2 | | | |
| | 1 | | | |
| H₂SiO₃ | 1 | www.macklin.cn | -- | √ |
| | | CAS: 1343-98-2, S105616 | | |
| Si₃N₄ | 1 | www.aladdin-e.com | -- | √ |
| | | CAS: 12033-89-5, S106137, 1 µm | | |
| SiC | 1 | www.macklin.cn | -- | √ |
| | | CAS: 409-21-2, S888609, 1 µm | | |

| | | | | |
|---|---|---|---|---|
| ("√" means "applicable", and "--" means "not applicable", which also applies hereinafter) | | | | |

**Table A.2**

| Second inorganic particles | Particle diameter involved in embodiment (nm) | Directly purchased from (CAS number, lot number, median diameter) | Planetary ball milling | Direct use |
|---|---|---|---|---|
| K₂SiO₃ | 50 | Tongxiang Hengli Chemical Co., Ltd., 50 nm | -- | √ |
| Si | 30 | Ningbo Jinlei Nano Material Technology Co., Ltd. | -- | √ |
| | | CAS: 7440-21-3, JLSi-NC30, 30 nm | | |
| SiO₂ | 10 | www.macklin.cn | -- | √ |
| | | CAS: 60676-86-0, S817576, 10 nm | | |
| | 30 | www.macklin.cn | | |
| | | CAS: 60676-86-0, S817575, 30 nm | | |
| | 55 | www.macklin.cn | | |
| | | CAS: 60676-86-0, S817567, 55 nm | | |
| | 500 | www.macklin.cn | | |
| | | CAS: 60676-86-0, S823241, 500 nm | | |

Other raw materials:
CMC-Na (CAS: 9004-32-4, C804622, www.macklin.cn)
PAA-Na (CAS: 9003-04-07, S818399, www.macklin.cn)
SA (CAS: 9005-38-3, S902506, www.macklin.cn)
PSS-Na (CAS: 25704-18-1, P874965, www.macklin.cn)
PP base film (Ningde Zhuogao New Material Technology Co., Ltd., 7 µm thick)
PE base film (Ningde Zhuogao New Material Technology Co., Ltd., 5 µm, 7 µm, 8 µm, 10 µm in thickness, thickness to be selected according to description in embodiments)

### Embodiment 1-3

### [Preparing a separator]

Mixing well the first inorganic particle K₂SiO₃ (by mass of K₂SiO₃, 20 g) (D1 is 1 µm) and the second inorganic particle SiO₂ (by mass of SiO₂, 30 g) (D₂ is 10 nm) at a mass ratio of 2: 3, adding 125 grams of deionized water into the mixture, and stirring for 2 hours to obtain a homogeneous slurry 1. Weighing out an appropriate amount of organic binder PAA-Na, mixing the organic binder with the inorganic particles at a mass ratio between organic binder and inorganic particles being 5: 95 (that is, A1/A2 = 5.3: 100), adding 524.7 grams of water, and stirring for 2 hours to obtain an organic binder solution 2. Mixing the homogeneous slurry 1 with the organic binder solution 2 to form a mixed slurry. Spreading the mixed slurry onto both the front side and the reverse side of a 7-µm-thick PP base film (with the whole surface coated), where the coating thickness on the front side of the base film is 2 µm, and the coating thickness on the reverse side of the base film is 2 µm. Performing drying to obtain the separator according to Embodiment 1-3.

### [Preparing a positive electrode plate]

Mixing the positive active material LiMn₂O₄, the positive active material LiNi_{0.8}Co_{0.1}Mn_{0.1}O₂, the binder polyvinylidene difluoride, and the conductive agent acetylene black at a mass ratio of 4.8: 3.2: 1: 1, and adding an appropriate amount of solvent N-methyl-pyrrolidone (NMP) so that the solid content of the slurry is 50 wt% to 80 wt%. Stirring the mixture with a vacuum mixer to obtain a positive slurry. Spreading the positive slurry well onto a positive current collector aluminum foil. Air-drying the aluminum foil at a room temperature, and then transferring the aluminum foil into a 120 °C oven to dry for 1 hour, and performing cold pressing and slitting to obtain a positive electrode plate.

### [Preparing a negative electrode plate]

Mixing artificial graphite, conductive agent carbon black, and binder CMC-Na at a mass ratio of 8: 1: 1, and adding an appropriate amount of deionized water to make the solid content of the slurry be 40 wt% to 60 wt%. Stirring the mixture with a vacuum mixer to obtain a negative slurry. Spreading the negative slurry well onto a negative current collector copper foil. Air-drying the copper foil at a room temperature, and then transferring the copper foil into a 120 °C oven to dry for 1 hour, and performing cold pressing and slitting to obtain a negative electrode plate.

### [Preparing an electrolytic solution]

Taking an appropriate amount of ethylene carbonate (EC) and dimethyl carbonate (DMC), mixing them at a volume ratio of 1: 1, and stirring the solution well to obtain a mixed solution. Adding an appropriate amount of LiPF₆ into the mixed solution. Stirring until thorough dissolution to formulate a solution with a LiPF₆ concentration of 1 mol/L, thereby forming an electrolytic solution.

### [Preparing a lithium-ion battery]

Placing the positive electrode plate, separator, and negative electrode plate into a feeder position. Adjusting the in-feed position so that the separator is located between the positive electrode plate and the negative electrode plate to serve an isolation function, and then winding the stacked plates to obtain a bare cell. Placing the bare cell into a housing, injecting an electrolytic solution, and performing steps such as vacuum packaging, standing, chemical formation, and shaping to obtain a lithium-ion battery.

### Embodiments 1-1, 1-2, and 1-4 to 1-13, Comparative Embodiments C1 to C4

Identical to Embodiment 1-3 except that the organic binder is PAA-Na, PAA-Na, PAA-Na, PAA-Na, PAA-Na, PAA-Na, PAA-Na, PAA-Na, PSS-Na, SA-Na, PAA-Na, PAA-Na, PAA-Na, PAA-Na, PAA-Na, and PAA-Na, respectively, the first inorganic particle is K₂SiO₃ (5 µm in median diameter), K₂SiO₃ (2 µm in median diameter), K₂SiO₃ (1.2 µm in median diameter), K₂SiO₃ (1.5 µm in median diameter), K₂SiO₃ (1 µm in median diameter), H₂SiO₃ (1 µm in median diameter), Si (1 µm in median diameter), SiO₂ (1 µm in median diameter), SiO₂ (1 µm in median diameter), SiO₂ (1 µm), SiO₂ (3 µm in median diameter), SiO₂ (5 µm in median diameter), Si₃N₄ (1 µm in median diameter), SiC (1 µm in median diameter), K₂SiO₃ (3 µm in median diameter), and K₂SiO₃ (6 µm in median diameter), respectively, and the second inorganic particle is SiO₂ (10 nm in median diameter), SiO₂ (10 nm in median diameter), SiO₂ (30 nm in median diameter), SiO₂ (55 nm in median diameter), SiO₂ (55 nm in median diameter), SiO₂ (10 nm in median diameter), SiO₂ (10 nm in median diameter), SiO₂ (10 nm in median diameter), SiO₂ (10 nm in median diameter), SiO₂ (10 nm in median diameter), Si (30 nm in median diameter), K₂SiO₃ (50 nm in median diameter), SiO₂ (10 nm in median diameter), SiO₂ (10 nm in median diameter), SiO₂ (500 nm in median diameter), and SiO₂ (10 nm in median diameter), respectively.

### Embodiments 2-1 to 2-7

Identical to Embodiment 1-3 except that the organic binder is SA, the m1/m2 ratio is 0.4, 0.5, 0.67, 1.2, 2.5, 4.0, and 5, respectively, and the base film of the separator is a PE material.

### Embodiments 3-1 to 3-7

Identical to Embodiment 1-3 except that the mass A1 of the organic binder in the organic-inorganic hybrid layer is 0.93 mg, 2 mg, 46 mg, 100.7 mg, 252 mg, 448 mg, and 594 mg, respectively, the mass A2 of the inorganic particles is 1.55 g, 2.0 g, 1.84 g, 1.90 g, 2.12 g, 1.79 g, and 1.97 g, respectively, and the organic binder is PSS-Na.

### Embodiments 4-1 to 4-7

Identical to Embodiment 1-3 except that the organic binder is CMC-Na, the thickness d1 of the organic-inorganic hybrid layer is 2 µm, 2 µm, 3 µm, 4 µm, 5 µm, 6 µm, 6 µm, respectively, the thickness of the base film is 10 µm, 8 µm, 8 µm, 7 µm, 7 µm, 7 µm, 5 µm, respectively, and the base film of the separator is a PE material.

### Embodiment 5-3

### [Preparing a separator]

The separator is prepared according to the following method:
Mixing well the first inorganic particle K₂SiO₃ (by mass of K₂SiO₃, 20 g) (D1 is 1 µm) and the second inorganic particle K₂SiO₃ (by mass of K₂SiO₃, 30 g) (D₂ is 10 nm) at a mass ratio of 2: 3, adding 125 grams of deionized water into the mixture, and stirring for 2 hours to obtain a homogeneous slurry 1. Weighing out 2.65 grams of organic binder CMC-Na, mixing the organic binder (mass: A1 mg) with the inorganic particles (mass: A2 g) at a mass ratio of A1/A2 = 5.3%, adding 524.7 grams of water, and stirring for 2 hours to obtain an organic binder solution 2. Mixing the homogeneous slurry 1 and the organic binder solution 2 to form a mixed slurry.

Determining an areal ratio between a coating region and a blank region on both the front side and the reverse side of a base film made of a 7-µm-thick PE material so that the areal ratio between the front coating region and the front blank region is 1.5: 1, and that the areal ratio between the reverse coating region and the reverse blank region is 0.67: 1. Spreading the mixed slurry evenly onto the front coating region and the reverse coating region separately, where the coating thickness in the front coating region and the coating thickness in the reverse coating region are both 3 µm. Performing drying to obtain the separator in Embodiment 5-3.

The processes of [preparing a positive electrode plate], [preparing a negative electrode plate], [preparing an electrolytic solution], and [preparing a lithium-ion battery] are the same as those described in Embodiment 1-1.

### Embodiments 5-1 to 5-2 and 5-4 to 5-5

Identical to Embodiment 5-3 except that the areal ratio between the front coating region and the front blank region of the base film is 0.85: 1, 1: 1, 3: 1, and 3.5: 1, respectively, and the areal ratio between the reverse coating region and the reverse blank region of the base film is 0.48: 1, 0.5: 1, 1: 1, and 1.5: 1, respectively.

### Embodiments 6-1 to 6-4

Identical to Embodiment 5-3 except that the mass percent of inorganic particles in the organic-inorganic hybrid layer on the front side of the base film is 95%, 95%, 98%, and 95%, respectively, and the mass percent of inorganic particles in the organic-inorganic hybrid layer on the reverse side of the base film is 80%, 95%, 95%, and 93%, respectively.

### [Testing relevant parameters of the separator]

### 1. Testing the peeling force between the organic-inorganic hybrid layer and the base film (that is, the bonding force in Table 3)

Cutting out a 100 mm (length) × 10 mm (width) specimen from the separator in the embodiments and comparative embodiments. Taking a stainless steel sheet 25 mm wide, sticking double-sided tape (11 mm wide) to the steel sheet, pasting the specimen onto the double-sided tape on the stainless steel sheet, and using a 2000 g pressure roller to roll on the surface of the specimen back and forth for three times (at a speed of 300 mm/min). Bending the specimen for 180 degrees, manually peeling off the organic-inorganic hybrid layer of the specimen from the base film by 25 mm apart. Fixing the specimen onto a testing machine (such as INSTRON 336), and keeping the peeling surface consistent with the force line of the testing machine. Performing peel-off operations continuously on the testing machine at a speed of 30 mm/min to obtain a peeling force curve. Averaging out the values that result in steady break-off, and using the average value as the peeling force F0. Determining the bonding force F between the organic-inorganic hybrid layer in the specimen and the current collector by the following formula. F = F0/width of specimen (unit of F: N/m).

### 2. Testing the air permeability of the separator

Measuring the air permeability of the separator by a Gurley method using a Gurley 4110 air permeameter made in the United States. Unfolding the separator, selecting a flat and smear-free position of the separator as a specimen, placing the specimen at an air outlet of an air compression cylinder. Tightening the outlet to fix the separator at a specimen holder, and compressing the air in the cylinder by using the gravity of the cylinder. As the air passes through the specimen, the cylinder declines steadily. Measuring the time required for passing 100 CC of air through the 6.45 cm² specimen, thereby obtaining the air permeability.

### 3. Testing the median diameter

Taking a clean beaker, adding an appropriate amount of the specimen. Adding a dispersant after adding a surfactant dropwise. Ultrasonicating at 120 W per 5 min to ensure that the specimen is thoroughly dispersed in the dispersant. The test instrument is Malvern 2000 made in the United States. Pouring the specimen into a specimen in-feed tower so that the specimen is circulated to a testing optical path system along with the solution. Irradiating the particles with a laser beam, receiving the scattered light, and measuring the energy distribution of the scattered light to obtain particle size distribution characteristics of the particles (shading degree: 8% to 12%). Plotting a mass-based particle size distribution curve and a number-based particle size distribution curve based on the test data. As can be seen from the curve, some particles with diameters greater than a D value account for 50% of the total mass, and remaining particles with diameters smaller than the D value account for 50% of the total mass. Therefore, the D value is a median diameter of the particles.

### 4. Method for testing thicknesses of the base film and the coating layer

Unfolding the base film on a horizontal surface. Folding the base film in half for N times, and measuring the thickness several times with a micrometer (such as a Mitutoyo digital micrometer). Assuming that the total thickness is Da, the thickness of a single-layer base film is d = Da/2N. Determining the thickness of the coating layer in the same way by the formula: d1 = (Db - Da)/2N, where Db is the total thickness of the separator with the coating layer.

### [Testing relevant parameters of the battery]

### 1. Mn²⁺ concentration in the electrolytic solution inside the battery after 100 days of storage under 60 °C

The concentration of Mn²⁺ deposited at the negative electrode prevails as a result of the concentration. Disassembling the battery, taking out the negative electrode plate, soaking the negative electrode plate in a DMC solution for half an hour, washing off the residual electrolytic solution on the surface, and then air-drying the electrode plate. Weighing out an appropriate amount of the electrode plate, digesting the electrode plate with aqua regia, and filtering to obtain a solution. Subsequently, measuring the Mn²⁺ concentration in the solution with a Thermo Fisher Scientific 7000 tester. For example, the Mn²⁺ concentration in an embodiment of this application is a concentration measured by digesting 0.5 gram of negative electrode plate with 50 ml of aqua regia and filtering. The aqua regia is prepared by mixing 36 wt% concentrated hydrochloric acid and 68 wt% concentrated nitric acid at a volume ratio of 3: 1.

### 2. Testing a discharge direct-current resistance (DCR) after 1000 cycles

Charging a battery in a corresponding embodiment or comparative embodiment at a constant current of 0.5 C at 25 °C until the voltage reaches 4.25 V, and then charging the battery at a constant voltage of 4.25 V until the current reaches 0.05 C. Leaving the battery to stand for 10 minutes, and then discharging the battery at a constant current of 0.5 C until the voltage reaches 2.8 V. Recording the discharge capacity at this time as an initial capacity C₀. Repeating the foregoing process for 1000 cycles. Charging the battery again at a constant current of 0.5 C until the voltage reaches 4.25 V, and then charging the battery at a constant voltage of 4.25 V until the current reaches 0.05 C. Leaving the battery to stand for 10 minutes, and then discharging the battery at a constant current of 0.5 C for 30 seconds. Measuring the DCR at this time.

### 3. Testing 60 °C storage performance

Charging corresponding batteries in the embodiments and comparative embodiments at a constant current of 0.5 C at 25 °C until the voltage reaches 4.25 V, and then charging the battery at a constant voltage of 4.25 V until the current reaches 0.05 C. Leaving the battery to stand for 5 minutes, and then discharging the battery at a constant current of 0.5 C until the voltage reaches 2.8 V. Recording the discharge capacity at this time as an initial capacity C₀.

Charging the battery again at a constant current of 0.5 C until the voltage reaches 4.25 V, and then charging the battery at a constant voltage of 4.25 V until the current reaches 0.05 C. Putting the battery into an 60 °C thermostat, keeping the battery stored for 100 days, and then taking it out. Placing the battery in an atmospheric environment of 25 °C. Discharging, after the temperature of the lithium-ion battery drops to 25 °C, the lithium-ion battery at a constant current of 0.5 C until the voltage reaches 2.8 V, and then charging the battery again at a constant current of 0.5 C until the voltage reaches 4.25 V Finally, discharging the lithium-ion battery at a constant current of 0.5 C until the voltage reaches 2.8 V. Recording the discharge capacity at this time as C₁. After 100 days of storage, the high-temperature reversible capacity retention rate of the battery is M = C1/C0 × 100%.

**Table 1 Relevant performance indicators of the separator and battery**

| Serial number | Base film | Organic-inorganic hybrid layer | | | | | | Performance indicator | | |
|---|---|---|---|---|---|---|---|---|---|---|
| | | Organic binder | Inorganic particles | | | | | Mn²⁺ concentratio n after 100 days of storage under 60 °C (ppm) | Capacity retention rate after 100 days of storage under 60 °C (%) | DCR after 1000 cycles under 25 °C |
| | | | First inorganic particles | D1 (µm) | Second inorganic particles | D2 (nm) | D2/D 1 | | | |
| 1-1 | PP | PAA-Na | K₂SiO₃ | 5 | SiO₂ | 10 | 2 | 230 | 88% | 4.87 |
| 1-2 | PP | PAA-Na | K₂SiO₃ | 2 | SiO₂ | 10 | 5 | 126 | 91% | 3.83 |
| 1-3 | PP | PAA-Na | K₂SiO₃ | 1 | SiO₂ | 10 | 10 | 85 | 92% | 3.22 |
| 1-4 | PP | PAA-Na | K₂SiO₃ | 1.2 | SiO₂ | 30 | 25 | 110 | 90% | 3.45 |
| 1-5 | PP | PAA-Na | K₂SiO₃ | 1.5 | SiO₂ | 55 | 36.7 | 140 | 89% | 4.08 |
| 1-6 | PP | PAA-Na | K₂SiO₃ | 1 | SiO₂ | 55 | 55 | 200 | 88% | 4.2 |
| 1-7 | PP | PAA-Na | H₂SiO₃ | 1 | SiO₂ | 10 | 10 | 90 | 91.7% | 3.31 |
| 1-8 | PP | PAA-Na | Si | 1 | SiO₂ | 10 | 10 | 86 | 91.8% | 3.24 |
| 1-9 | PP | PAA-Na | SiO₂ | 1 | SiO₂ | 10 | 10 | 84 | 92.1% | 3.19 |
| 1-10 | PP | PSS-Na | SiO₂ | 1 | SiO₂ | 10 | 10 | 86 | 91.7% | 3.29 |
| 1-11 | PP | SA-Na | SiO₂ | 1 | SiO₂ | 10 | 10 | 88 | 91.8% | 3.34 |
| 1-12 | PP | PAA-Na | SiO₂ | 3 | Si | 30 | 10 | 87 | 91.9% | 3.28 |
| 1-13 | PP | PAA-Na | SiO₂ | 5 | K₂SiO₃ | 50 | 10 | 85 | 92.1% | 3.20 |
| C1 | PP | PAA-Na | Si₃N₄ | 1 | SiO₂ | 10 | 10 | 660 | 75% | 5.68 |
| C2 | PP | PAA-Na | SiC | 1 | SiO₂ | 10 | 10 | 740 | 72% | 5.31 |
| C3 | PP | PAA-Na | K₂SiO₃ | 3 | SiO₂ | 500 | 66.7 | 300 | 86% | 6.25 |
| C4 | PP | PAA-Na | K₂SiO₃ | 6 | SiO₂ | 10 | 1.67 | 360 | 87% | 5.02 |
| Remarks | The mass of the inorganic particles accounts for 95% of the total mass of the organic-inorganic hybrid layer, and the mass of the first inorganic particles accounts for 40% of the total mass of the inorganic particles. | | | | | | | | | |
| | Both the front side and the reverse side are coated, and the whole surface is coated with the organic-inorganic mixture. | | | | | | | | | |

As can be seen from Table 1, the concentration of manganese ions deposited on the negative electrode of the lithium-ion battery in Embodiments 1-1 to 1-13 is significantly lower than that in Comparative Embodiments C1 to C4, and the storage performance and power performance of the lithium-ion battery are superior to those in Comparative Embodiments C1 to C4.

As can be seen from comparison between Embodiment 1-3 and Embodiments 1-7 to 1-9, when the D2/D1 ratio is a constant value, and when different types of first inorganic particles are applied, all the lithium-ion batteries achieve superior storage performance and power performance, and the difference of performance is not significant.

As can be seen from comparison between Embodiment 1-3 and Embodiment 1-9, when the D2/D1 ratio is a constant value, whether the first inorganic particles are identical to the second inorganic particles brings insignificant impact on the storage performance and power performance of the lithium-ion battery.

As can be seen from comparison between Embodiment 1-3 and Embodiments 1-10 to 1-11, when the D2/D1 ratio is a constant value, the type of the organic binder brings insignificant impact on the storage performance and power performance of the lithium-ion battery.

As can be seen from comprehensive comparison between Embodiments 1-1 to 1-6 and Comparative Embodiments C3 to C4, when the D2/D1 ratio is less than 2 or greater than 55, the concentration of manganese ions deposited on the negative electrode of the lithium-ion battery is increased significantly, and the storage performance and power performance of the lithium-ion battery decline significantly.

**Table 2 Relevant performance indicators of the separator and battery**

| Serial number | Base film | Organic-inorganic hybrid layer | | | | | | | Performance indicator | | |
|---|---|---|---|---|---|---|---|---|---|---|---|
| | | Organic binder | Inorganic particles | | | | | | Mn²⁺ concentra tion after 100 days of storage under 60 °C (ppm) | Capacity retention rate after 100 days of storage under 60 °C (%) | DCR after 1000 cycles under 25 °C |
| | | | First inorganic particles | Second inorganic particles | D2/D 1 | m1/ g | m2/ g | ml/m2 | | | |
| 2-1 | PE | SA | K₂SiO₃ | SiO₂ | 10 | 1 | 2.5 | 0.4 | 97 | 89.6% | 4.31 |
| 2-2 | PE | SA | K₂SiO₃ | SiO₂ | 10 | 1.5 | 3 | 0.5 | 88 | 89.9% | 3.56 |
| 2-3 | PE | SA | K₂SiO₃ | SiO₂ | 10 | 1 | 1.5 | 0.67 | 80 | 93.1% | 3.35 |
| 2-4 | PE | SA | K₂SiO₃ | SiO₂ | 10 | 1.2 | 1 | 1.2 | 91 | 92.3% | 3.58 |
| 2-5 | PE | SA | K₂SiO₃ | SiO₂ | 10 | 1.25 | 0.5 | 2.5 | 104 | 91.7% | 3.94 |
| 2-6 | PE | SA | K₂SiO₃ | SiO₂ | 10 | 1 | 0.25 | 4.0 | 113 | 90.5% | 4.29 |
| 2-7 | PE | SA | K₂SiO₃ | SiO₂ | 10 | 1 | 0.2 | 5 | 121 | 88.3% | 4.57 |
| Remark s | Both the front side and the reverse side are coated, and the whole surface is coated with the organic-inorganic mixture. D2 = 10, and D1 = 1. | | | | | | | | | | |

According to Table 2, as can be seen from comprehensive comparison between Embodiments 2-1 to 2-7, on condition that the D2/D1 ratio is a constant value, when the m1/m2 ratio falls within the range of 0.5 to 4.0, the concentration of manganese ions deposited on the negative electrode of the lithium-ion battery is relatively low, and the storage performance and power performance are superior.

**Table 3 Relevant performance indicators of the separator and battery**

| Serial numb er | Base film | Organic-inorganic hybrid layer | | | | | | | Performance indicator | | | |
|---|---|---|---|---|---|---|---|---|---|---|---|---|
| | | Organic binder | | Inorganic particles | | | | | Bondin g force N/m | Mn²⁺ concentra tion after 100 days of storage under 60 °C (ppm) | Capacity retention rate after 100 days of storage under 60 °C (%) | DCR after 1000 cycles under 25 °C |
| | | Type | A1/ mg | First inorganic particles | Second inorganic particles | D2/ D1 | A2 (g) | Al/A 2 (%) | | | | |
| 3-1 | PP | PSS-Na | 0.93 | K₂SiO₃ | SiO₂ | 10 | 1.5 5 | 0.06 | 5.3 | 248 | 85.2% | 6.84 |
| 3-2 | PP | PSS-Na | 2 | K₂SiO₃ | SiO₂ | 10 | 2.0 | 0.1 | 6.2 | 183 | 86.4% | 5.77 |
| 3-3 | PP | PSS-Na | 46 | K₂SiO₃ | SiO₂ | 10 | 1.8 4 | 2.5 | 7.8 | 124 | 87.7% | 4.36 |
| 3-4 | PP | PSS-Na | 100. 7 | K₂SiO₃ | SiO₂ | 10 | 1.9 0 | 5.3 | 9.3 | 83 | 92.8% | 3.25 |
| 3-5 | PP | PSS-Na | 252 | K₂SiO₃ | SiO₂ | 10 | 2.1 2 | 11.4 | 11.4 | 106 | 89.9% | 3.94 |
| 3-6 | PP | PSS-Na | 448 | K₂SiO₃ | SiO₂ | 10 | 1.7 9 | 25 | 13.5 | 134 | 88.4% | 3.55 |
| 3-7 | PP | PSS-Na | 594 | K₂SiO₃ | SiO₂ | 10 | 1.9 7 | 30.1 | 14.3 | 189 | 87.4% | 4.12 |
| Rema rks | The mass ratio between the first inorganic particles and the second inorganic particles is ml/m2 = 0.67. Both the front side and the reverse side are coated, and the whole surface is coated with the organic-inorganic mixture. D2 = 10, and D1 = 1. | | | | | | | | | | | |

According to Table 3, as can be seen from comprehensive comparison between Embodiments 3-1 to 3-7, on condition that the D2/D1 ratio is basically consistent, when the A1/A2 ratio falls within the range of 0.1 to 25, the concentration of manganese ions deposited on the negative electrode of the lithium-ion battery is relatively low, and the storage performance and power performance are superior. In contrast to Embodiment 3-1, the bonding force is higher.

**Table 4 Relevant performance indicators of the separator and battery**

| Serial numb er | Base film | | Organic-inorganic hybrid layer | | | | | | | Mn²⁺ concent ration after 100 days of storage under 60 °C (ppm) | Air per mea bilit y(s) | Capacity retention rate after 100 days of storage under 60 °C (%) |
|---|---|---|---|---|---|---|---|---|---|---|---|---|
| | | | Organic binder | | Inorganic particles | | | Total thickness of separator | | | | |
| | | Type | Thickne ss of base film (µm) | Thickness of coating layer on both sides d1 (µm) | First inorganic particles | Second inorganic particles | D2/ D1 | d (µ m) | d1/d | | | |
| 4-1 | PE | CMC-Na | 10 | 2 | K₂SiO₃ | SiO₂ | 10 | 12 | 17% | 248 | 224 | 86.3% |
| 4-2 | PE | CMC-Na | 8 | 2 | K₂SiO₃ | SiO₂ | 10 | 10 | 20% | 234 | 192 | 87.2% |
| 4-3 | PE | CMC-Na | 8 | 3 | K₂SiO₃ | SiO₂ | 10 | 11 | 27% | 158 | 247 | 88.9% |
| 4-4 | PE | CMC-Na | 7 | 4 | K₂SiO₃ | SiO₂ | 10 | 11 | 36% | 85 | 262 | 92.8% |
| 4-5 | PE | CMC-Na | 7 | 5 | K₃SiO₃ | SiO₂ | 10 | 12 | 42% | 80 | 283 | 90.4% |
| 4-6 | PE | CMC-Na | 7 | 6 | K₂SiO₃ | SiO₂ | 10 | 13 | 46% | 75 | 357 | 87.6% |
| 4-7 | PE | CMC-Na | 5 | 6 | K₂SiO₃ | SiO₂ | 10 | 11 | 55% | 79 | 336 | 88.3% |
| Rema rks | The mass ratio between the first inorganic particles and the second inorganic particles is ml/m2 = 0.67. The ratio of the mass A1 of the organic binder to the mass A2 of the inorganic particles is A1/A2 = 5.3: 100. Both the front side and the reverse side are coated, and the whole surface is coated with the organic-inorganic mixture. d1 is a sum of thicknesses of the upper layer and lower layer of the hybrid layer of the base film. D2 = 10, and D1 = 1. | | | | | | | | | | | |

According to Table 4, as can be seen from comprehensive comparison between Embodiments 4-1 to 4-7, on condition that the D2/D1 ratio is basically consistent, with the increase of the d1/d ratio, the concentration of manganese ions deposited on the negative electrode of the lithium-ion battery decreases, but the corresponding air permeability increases. With respect to the storage performance of the lithium-ion battery, when the value of the d1/d ratio falls within the range of 20% to 50%, the storage performance of the lithium-ion battery is optimal.

**Table 5 Relevant performance indicators of the separator and battery**

| Serial numb er | Base film | Separator | | | | | Performance indicator | | | |
|---|---|---|---|---|---|---|---|---|---|---|
| | | Organic-inorganic hybrid layer | | | Front side of base film | Reverse side of base film | Mn²⁺ concentrat ion after 100 days of storage under 60 °C (ppm) | Air per mea bilit y (s) | Capacity retention rate after 100 days of storage under 60 °C (%) | DCR after 1000 cycles under 25 °C |
| | | Organic binder | First/second inorganic particles | D2/ D1 | Areal ratio between front coating region and front blank region | Areal ratio between reverse coating region and reverse blank region | | | | |
| 5-1 | PE | CMC-Na | K₂SiO₃ | 10 | 0.85:1 | 0.48:1 | 121 | 201 | 88.4% | 2.71 |
| 5-2 | PE | CMC-Na | K₂SiO₃ | 10 | 1:1 | 0.5:1 | 108 | 211 | 90.2% | 2.85 |
| 5-3 | PE | CMC-Na | K₂SiO₃ | 10 | 1.5:1 | 0.67:1 | 90 | 226 | 92.6% | 3.03 |
| 5-4 | PE | CMC-Na | K₂SiO₃ | 10 | 3:1 | 1:1 | 80 | 280 | 90.4% | 3.14 |
| 5-5 | PE | CMC-Na | K₂SiO₃ | 10 | 3.5:1 | 1.5:1 | 76 | 350 | 87.3% | 3.26 |
| Rema rks | The mass ratio between the first inorganic particles and the second inorganic particles is ml/m2 = 0.67. The ratio of the mass percent A1 of the organic binder to the mass percent A2 of the inorganic particles is A1/A2 = 5.3: 100. The thickness of the base film is 7 µm. D2 = 10, and D1 = 1. | | | | | | | | | |

According to Table 5, as can be seen from comprehensive comparison between Embodiments 5-1 to 5-5, on condition that the D2/D1 ratio is basically consistent, with the increase of the areal ratio between the front coating region and the front blank region, and with the increase of the areal ratio between the reverse coating region and the reverse blank region, the concentration of manganese ions deposited on the negative electrode of the lithium-ion battery decreases, but the corresponding air permeability becomes worse. With respect to the storage performance of the lithium-ion battery, when the areal ratio between the front coating region and the front blank region falls within 1: 1 to 3: 1, and the areal ratio between the reverse coating region and the reverse blank region falls within 0.5: 1 to 1:1, the storage performance of the lithium-ion battery is optimal, and the power performance is relatively high.

**Table 6 Relevant performance indicators of the separator and battery**

| Serial numb er | Base film | Separator | | | | | Performance indicator | | | |
|---|---|---|---|---|---|---|---|---|---|---|
| | | Organic-inorganic hybrid layer | | | Front side of base film | Reverse side of base film | Mn²⁺ concentratio n after 100 days of storage under 60 °C (ppm) | Air perme ability (s) | Capacity retention rate after 100 days of storage under 60 °C (%) | DCR after 1000 cycles under 25 °C (Ω) |
| | | Organic binder | First/second inorganic particles | D2/ D1 | Mass percent of inorganic particles in organic-inor ganic hybrid layer (%) | Mass percent of inorganic particles in organic-inor ganic hybrid layer (%) | | | | |
| 6-1 | PE | CMC-N a | K₂SiO₃ | 10 | 95% | 80% | 114 | 203 | 91.6% | 2.68 |
| 6-2 | PE | CMC-N a | K₂SiO₃ | 10 | 95% | 95% | 98 | 217 | 92.4% | 2.94 |
| 6-3 | PE | CMC-N a | K₂SiO₃ | 10 | 98% | 95% | 86 | 228 | 92.8% | 3.12 |
| 6-4 | PE | CMC-N a | K₂SiO₃ | 10 | 95% | 93% | 102 | 221 | 92.0% | 2.87 |
| Rema rks | The mass ratio between the first inorganic particles and the second inorganic particles is ml/m2 = 0.67. The ratio of the mass percent A1 of the organic binder to the mass percent A2 of the inorganic particles is A1/A2 = 5.3: 100. The thickness of the base film is 7 µm. D2 = 10, and D1 = 1. | | | | | | | | | |

According to Table 6, as can be seen from comprehensive comparison between Embodiments 6-1 to 6-4, when "the mass percent of inorganic particles in the organic-inorganic hybrid layer on the front side is not less than the mass percent of inorganic particles in the organic-inorganic hybrid layer on the reverse side of the base film", the effect in reducing the content of transition metal ions is more evident, a relatively high air permeability of the separator is achieved concurrently, and the lithium-ion battery is superior in both storage performance and power performance.

## Claims

1. A separator, **characterized in that**,
the separator comprises a base film and an organic-inorganic hybrid layer located on at least one surface of the base film, wherein the organic-inorganic hybrid layer comprises inorganic particles and an organic binder;
the inorganic particles are formed of first inorganic particles with a micronscale median diameter and second inorganic particles with a nanoscale median diameter, a ratio of a median diameter value D1 of the first inorganic particles in µm to a median diameter value D2 of the second inorganic particles in nm satisfies 2 ≤ D2/D1 ≤ 55, and the first inorganic particles or the second inorganic particles are selected from (SiOₓ)(H₂O)_{y} or (M^{c+})_{b}(SiO_{z})^{a-},
wherein, 0 ≤ x ≤ 2, 0 ≤ y ≤ 2, y is an integer, z = 3 or 4, a = 2 or 4, b × c = a, and M is optionally one or more of lithium, sodium, potassium, magnesium, calcium, or aluminum.

2. The separator according to claim 1, **characterized in that**,
a part of the first inorganic particles and/or the second inorganic particles protrude from a surface of the organic-inorganic hybrid layer.

3. The separator according to claim 1 or 2, **characterized in that**,
the median diameter value D1 of the first inorganic particles in µm is 1 to 5, and the median diameter value D2 of the second inorganic particles in nm is 10 to 55.

4. The separator according to any one of claims 1 to 3, **characterized in that**,
the organic binder is at least one of an alkali metal salt of carboxylic acid containing a hydroxyl and/or a carboxyl, or an alkali metal salt of sulfonic acid containing a hydroxyl and/or a carboxyl, and further optionally at least one of sodium carboxymethyl cellulose (CMC-Na), polyacrylic acid sodium (PAA-Na), sodium polystyrene sulfonate (PSS-Na), or sodium alginate (SA).

5. The separator according to any one of claims 1 to 4, **characterized in that**,
the inorganic particles are one or more of Si, SiO₂, H₂SiO₃, H₄SiO₄, K₂SiO₃, K₄SiO₄, or Na₄SiO₄; and optionally,
the first inorganic particles are optionally at least one of Si, SiO₂, H₂SiO₃, H₄SiO₄, K₂SiO₃, K₄SiO₄, or Na₄SiO₄, and the second inorganic particles are optionally SiO₂ and/or K₂SiO₃.

6. The separator according to any one of claims 1 to 5, **characterized in that**,
in the organic-inorganic hybrid layer, a mass m1 of the first inorganic particles and a mass m2 of the second inorganic particles satisfy 0.5 ≤ m1/m2 ≤ 4.

7. The separator according to any one of claims 1 to 6, **characterized in that**,
in the organic-inorganic hybrid layer, a ratio A1/A2 of a mass percent A1 of the organic binder to a mass percent A2 of the inorganic particles is (0.1 to 25): 100.

8. The separator according to any one of claims 1 to 7, **characterized in that**,
in the organic-inorganic hybrid layer, a mass percent of the inorganic particles is 80% to 99.9%, a mass percent of the organic binder is 0.1% to 20%, based on a total mass of the organic-inorganic hybrid layer.

9. The separator according to any one of claims 1 to 8, **characterized in that**,
a thickness d1 of the organic-inorganic hybrid layer is 20% to 50% of a total thickness d of the separator, and the total thickness d of the separator is 6 to 25 µm.

10. The separator according to any one of claims 1 to 9, **characterized in that**,
a front side of the base film comprises a front coating region and a front blank region, and an areal ratio between the front coating region and the front blank region is (1 to 3): 1; and
a reverse side of the base film comprises a reverse coating region and a reverse blank region, and an areal ratio between the reverse coating region and the reverse blank region is (0.5 to 1): 1, and the front coating region and the reverse coating region are surface-coated with the organic-inorganic hybrid layer.

11. The separator according to any one of claims 1 to 10, **characterized in that**,
the front side and reverse side of the base film each are coated with the organic-inorganic hybrid layer, and a mass percent of inorganic particles in the organic-inorganic hybrid layer on the front side of the base film is not less than a mass percent of inorganic particles in the organic-inorganic hybrid layer on the reverse side of the base film; and the organic-inorganic hybrid layer on the front side of the base film is in contact with a positive electrode, and the organic-inorganic hybrid layer on the reverse side of the base film is in contact with a negative electrode.

12. The separator according to any one of claims 1 to 11, **characterized in that**,
the front blank region coincides with an orthographic projection of the reverse coating region, the reverse blank region coincides with an orthographic projection of the front coating region, and the front coating region and the reverse coating region are surface-coated with the organic-inorganic hybrid layer.

13. The separator according to any one of claims 1 to 12, **characterized in that**,
a thermal shrinkage rate of the separator is 70% to 75% lower than a thermal shrinkage rate of the base film.

14. A lithium-ion battery, comprising the lithium-ion battery according to any one of claims 1 or 13.

15. A battery module, comprising the lithium-ion battery according to claim 14.

16. A battery pack, comprising at least one of the lithium-ion battery according to claim 14 or the battery module according to claim 15.

17. An electrical device,
comprising at least one of the lithium-ion battery according to claim 14, the battery module according to claim 15, or the battery pack according to claim 16, wherein the lithium-ion battery or the battery module or the battery pack is used as a power supply of the electrical device or an energy storage unit of the electrical device.
